# EUROPÄISCHE PATENTANMELDUNG

(11) **EP 4 378 828 A1**
(43) Veröffentlichungstag der Anmeldung: **05.06.2024**
(21) Anmeldenummer: 23199583.8
(22) Anmeldetag: 26.09.2023
(51) Int. Cl.: B64C 11/00, B64C 13/28, F16D 63/00

(54) **BLOCKIEREINHEIT, ELEKTROMECHANISCHE EINHEIT UND LUFTFAHRZEUG**

(30) Priorität: 30.11.2022 DE 102022131677
(71) Anmelder: Liebherr-Aerospace Lindenberg GmbH, 88161 Lindenberg (DE)
(72) Erfinder: HEIM, Patrick, 88161 Lindenberg (DE); FORSCHNER, Paul, 6900 Bregenz (AT); GAILE, Anton, 88299 Leutkirch (DE)
(74) Vertreter: Laufhütte, Dieter

(57) **Zusammenfassung**

Die vorliegende Erfindung betrifft eine Blockiereinheit (1) für eine durch mindestens ein Bewegungsmittel bewegbare Komponente (2,11) eines Luftfahrzeugs, wobei die Komponente (2,11) mindestens eine Blockierposition und mindestens eine Bewegungsposition einnehmen kann, wobei die Blockiereinheit (1) Blockiermittel (13) aufweist, wobei die Blockiermittel (13) dazu angeordnet und ausgebildet sind, eine Bewegung der Komponente (2,11) zu blockieren, wenn eine Blockierbedingung erfüllt ist, wobei die Blockiereinheit (1) Sperrmittel (13a) aufweist, wobei die Sperrmittel (13a) derart angeordnet und ausgebildet sind, dass die Blockiermittel (13) daran gehindert werden, die Bewegung der Komponente (2,11) zu blockieren, wenn sich die Komponente (2,11) in einer Bewegungsposition befindet und wobei die Sperrmittel (13a) derart angeordnet und ausgebildet sind, dass die Blockiermittel (13) nicht daran gehindert werden, die Bewegung der Komponente (2,11) zu blockieren wenn sich die Komponente (2,11) in einer Blockierposition befindet.

## Beschreibung

Die vorliegende Erfindung betrifft eine Blockiereinheit für eine durch mindestens ein Bewegungsmittel bewegbare Komponente eines Luftfahrzeugs, wobei die Komponente mindestens eine Blockierposition und mindestens eine Bewegungsposition einnehmen kann, wobei die Blockiereinheit Blockiermittel aufweist, wobei die Blockiermittel dazu angeordnet und ausgebildet sind, eine Bewegung der Komponente zu blockieren, wenn eine Blockierbedingung erfüllt ist.

In aus dem Stand der Technik bekannten Luftfahrzeugen wird eine Vielzahl von Verbrauchern hydraulisch versorgt oder diese Luftfahrzeuge verfügen über Einheiten, die elektrische Energie in Hydraulikdruck umwandeln können.

Hydraulische Aktuatoren weisen üblicherweise zwei Kammern auf. Diese beiden Kammern solcher hydraulischen Aktuatoren können z.B. durch Überdruckventile oder Drosseln miteinander verbunden werden und so können auch ohne Signal oder Hydraulikversorgung gewisse Funktionen gewährleistet werden.

Z.B. kann eine Bremsklappe durch unterschiedliche genau einstellbare Überdruckventile unterschiedlichen Kräften in Aus- und Einfahrrichtung entgegenwirken und ab einer bestimmten Kraft nachgeben. Dies ist vor allem nötig bei Bremsklappen, die den Hochauftriebsklappen nachfahren, um die Kontaktkraft zwischen Bremsklappe und Hochauftriebsklappe zu reduzieren, wenn die Hydraulik- oder Signalversorgung nicht mehr gewährleistet ist.

Ein anderes Beispiel betrifft die Betätigung z.B. eines Querruders, welches bei Verlust von Hydraulik- oder Signalversorgung hydraulisch gedämpft wird und so ein Aufschwingen oder das Verbleiben in einem Steuerausschlag verhindert wird.

Mit zunehmender Elektrifizierung der Luftfahrzeuge bieten elektromechanische Antriebseinheiten viele Vorteile. Ein wesentlicher Nachteil besteht jedoch darin, dass mechanische Überlastkupplungen, Bremsen oder Dämpfungen eine deutlich höhere Komplexität aufweisen und aufgrund von z.B. Verschleiß oder Wirkungsgradänderungen weniger genau eingestellt werden können.

Aktuelle Umsetzungen von mechanischen Überlastkupplungen, Bremsen oder Dämpfungen in elektromechanischen Einheiten weisen aktuell nur einen Betriebszustand auf, wenn entweder Signal- und/oder Stromversorgung nicht mehr verfügbar sind.

Zum Beispiel verfügen elektrische Antriebe von Hochauftriebssystemen meist über eine integrierte Bremse, die ohne Signal- oder Stromversorgung das System unabhängig von der Lastrichtung und aktueller Position fixieren. Dies würde bei der Anwendung in Bremsklappen oder bei z.B. Querrudern ggf. zu einem erhöhten Luftwiderstand führen oder, wenn die Bremsklappen dem Hochauftriebssystem nachfahren, dazu führen, dass das Hochauftriebssystem nicht mehr eingefahren werden kann.

Ein anderes Beispiel sind elektromechanische Antriebseinheiten in Bremsklappen moderner Verkehrsflugzeuge, die im Fehlerfall nicht fixiert werden und in der sogenannten Zero-Hinge-Position verbleiben, wobei in dieser Position Unterdrucklasten an der Flügeloberseite und Windlasten sich ausgleichen. Dies führt jedoch zu reduziertem Auftrieb und erhöhtem Verbrauch.

Wenn die Steuerklappen in einer oder beiden Lastrichtungen fixiert werden und ab einer gewissen Last nachgeben sollen ist je nach Anwendungsgebiet die Notwendigkeit einer Lastlimitierung gegeben. Diese benötigt ggf. in Zug- und Druckrichtung unterschiedliche Auslösepunkte und wird über einen elektrisch betriebenen Mechanismus aktiviert oder deaktiviert. Richtungsabhängigkeit kann z.B. über einen Ratschenmechanismus oder einen sogenannten Skewed Roller erfolgen. Die Aktivierung ist beispielsweise über eine Bremse oder eine Kupplung möglich und die Überlastfunktion kann z.B. über eine federvorgespannte Kugelrampe oder eine mechanische Rutschkupplung etc. ungesetzt sein.

Diese Lösungen haben einen signifikanten Nachteil bzgl. bspw. Gewicht, Bauraum, Kosten und/oder Komplexität. Weitere Aspekte sind die Varianz der Auslösekräfte und deren Einfluss auf Performance, Wirkungsgrad und Auslegungskräfte der elektromechanischen Einheit sowie die Autorität der Steuerfläche.

Vor diesem Hintergrund liegt der vorliegenden Erfindung die Aufgabe zugrunde, eine oben genannte Blockiereinheit, insbesondere für eine Einsatz in einer elektromechanischen Einheit, gegenüber dem Stand der Technik zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Blockiereinheit Sperrmittel aufweist, wobei die Sperrmittel derart angeordnet und ausgebildet sind, dass die Blockiermittel daran gehindert werden, die Bewegung der Komponente zu blockieren, wenn sich die Komponente in einer Bewegungsposition befindet und wobei die Sperrmittel derart angeordnet und ausgebildet sind, dass die Blockiermittel nicht daran gehindert werden, die Bewegung der Komponente zu blockieren wenn sich die Komponente in einer Blockierposition befindet.

Die Bewegungsposition und/oder die Blockierposition können auch Bestandteile eines Bewegungsbereichs oder Blockierbereichs sein. Die Bereiche können auch unterbrochen sein, sodass mehrere Bewegungsbereiche und/oder Blockierbereiche vorhanden sein können.

Somit kann bspw. eine Klappe durch aerodynamische Kräfte in eine Blockierposition bewegt werden und erst dort blockiert werden. Dadurch wird bspw. verhindert, dass die Klappe unnötigen Luftwiderstand erzeugt.

Vorzugsweise ist vorgesehen, dass die Komponente linear und/oder rotatorisch bewegbar ist.

In einer vorteilhaften Ausführungsform ist vorgesehen, dass die Sperrmittel mechanisch, vorzugsweise über einen Hebelmechanismus, mit der Komponente verbunden sind.

Vorzugsweise ist vorgesehen, dass die Sperrmittel derart ausgebildet sind, dass die Sperrmittel keine Strom- und/oder Signalversorgung benötigen, um die Blockiermittel daran hindern zu können, die Bewegung der Komponente zu blockieren, wenn sich die Komponente in einer Bewegungsposition befindet.

Denkbar ist, dass die Blockierbedingung ein Ausfall der Strom- und/oder Signalversorgung für mindestens ein Bewegungsmittel der Komponente ist.

Denkbar ist, dass die Blockiermittel derart ausgebildet und angeordnet sind, um die Bewegung der Komponente mittels Reib- und/oder Formschluss blockieren können.

Vorzugsweise ist vorgesehen, dass die Blockiermittel derart ausgebildet und angeordnet sind, dass eine Kraftbegrenzung einer auf die Komponente wirkenden Kraft erfolgt.

Vorzugsweise ist vorgesehen, dass die Blockiermittel derart ausgebildet und angeordnet sind, dass eine Bewegung der Komponente nur in eine, in zwei oder mehreren Richtungen blockiert werden kann.

In einer vorteilhaften Ausführungsform ist vorgesehen, dass die Blockiermittel Bremsstatorscheiben umfassen und die Sperrmittel ein Sperrelement, vorzugsweise in Form einer Gabel, umfassen, wobei die Bremsstatorscheiben und das Sperrelement derart ausgebildet und angeordnet sind, dass das Sperrelement mindestens teilweise zwischen den Bremsstatorscheiben angeordnet ist, wenn sich die Komponente in einer Bewegungsposition befindet und das Sperrelement nicht zwischen den Bremsstatorscheiben angeordnet ist, wenn sich die Komponente in einer Blockierposition befindet.

Denkbar ist, dass die Blockiereinheit derart ausgebildet und angeordnet ist, dass eine Bewegung der Komponente aus einer Bewegungsposition heraus, vorzugsweise durch Reibung und/oder Fluidbewegung und/oder elektrisch, gedämpft oder ungedämpft erfolgt.

Vorzugsweise ist vorgesehen, dass die Blockiermittel derart ausgebildet und angeordnet sind, dass wenn eine Blockierung der Komponente erfolgt ist, die Aufhebung der Blockierung nur durch ein Verfahren, welches den Schritt umfasst, dass ein, vorzugsweise elektrisches, Signal an die Blockiermittel gesendet wird, erfolgen kann.

In anderen Worten können die Blockiermittel eine Steuerung umfassen, die derart ausgebildet ist, dass die die Aufhebung einer Blockierung durch die Blockiermittel durch ein, vorzugsweise elektrisches, Signal erfolgen kann.

In einer vorteilhaften Ausführungsform ist vorgesehen, dass die Komponente ein Teil eines Motors, einer elektromechanischen Einheit, eine Bremsklappe, eine Komponente einer primären oder sekundären Flugsteuerung, eine Klappenbetätigung und/oder eine Fahrwerksbetätigung ist oder umfasst.

Die Erfindung betrifft auch eine elektromechanische Einheit mit einer erfindungsgemäßen Blockiereinheit.

Die Erfindung betrifft auch ein Luftfahrzeug, insbesondere Flugzeug mit einer erfindungsgemäßen Blockiereinheit.

Die Blockiereinheit in bspw. einer elektromechanischen Einheit wird vorzugsweise in einem gewissen, sicheren Blockierbereich fixiert wird und wirkt externen Lasten entgegen, wenn z.B. Signal- und/oder Stromversorgung nicht mehr gegeben sind. Dies kann vorzugweise unabhängig von der aktuellen Position der elektromechanischen Einheit ermöglicht werden.

Vorzugsweise kann eine durch die elektromechanische Einheit betätigte Komponente während eines Fehlerfalls (z.B. Verlust der Strom- und/oder Signalversorgung) durch die elektromechanische Einheit in einer oder mehreren sicheren Blockierpositionen fixiert werden. Außerhalb dieser Blockierpositionen ist die Komponente vorzugsweise frei bewegbar und kann vorzugsweise durch externe Lasten ungedämpft oder gedämpft bewegen. Die Dämpfung kann elektronisch erfolgen, indem der Motor der elektromechanischen Einheit im Generatorbetrieb arbeitet und Energie zurückgewonnen oder vernichtet wird. Eine andere Art der Dämpfung kann z.B. ein Reibelement sein oder über Fluidbewegung erfolgen. Die Fixierung benötigt vorzugsweise weder ein Signal noch eine Stromversorgung.

Vorzugsweise erfolgt eine Aktivierung der Blockierung durch eine Mechanik, welche nur in einem gewissen Bewegungsbereich bzw. Hubbereich der Komponente aktiviert wird. Daher benötigt die Blockiereinheit vorzugsweise keine Lastlimitierung.

Es ist vorzugsweise vorgesehen, dass die Blockiereinheit Bestandteil einer elektromechanischen Einheit sein kann, wobei die Blockiereinheit nur in einem oder mehreren Hub- oder Bewegungsbereichen aktiv sein kann und/oder in einer elektromechanischen Einheit mit rotatorischem oder linearen Betätigungselement verwendet werden kann und/oder eine mechanische Koppelung zwischen der Blockiereinheit und der Komponente vorhanden sein kann und/oder wobei die Blockiereinheit ohne Strom oder Signalversorgung aktiv sein kann und/oder, wenn die Blockiereinheit einmal aktiviert ist, eine elektrische Aktivierung für den Reset benötigt werden kann und/oder die Blockiereinheit automatisch aktiviert werden kann durch Positionierung der Komponente in den oder die definierten Blockierbereiche und/oder wobei die Blockiereinheit durch Reib- oder Formschluss blockieren kann und/oder wobei in der Blockiereinheit bei Verwendung des Reibschlusses auch eine Kraftbegrenzung inkludiert sein kann und/oder wobei die Blockiereinheit in beide Richtungen wirken kann.

Vorzugsweise kann die elektromechanische Einheit eine stationäre Struktur und ein Betätigungselement, das relativ zu der stationären Struktur beweglich ist bzw. eine Komponente aufweisen, wobei die elektromechanische Einheit Blockiermittel aufweisen kann, um das Betätigungselement in seiner Position zu verriegeln, wobei die Blockiermittel an der stationären Struktur angebracht sein können und einen Zustand zum Verriegeln und einen Zustand zum Freigeben des Betätigungselements aufweisen können, wobei die Blockiermittel einen Spannungsbegrenzer aufweisen können oder nicht, und mindestens ein Blockierelement mit Form- oder Reibschluss umfassen können, das so angeordnet ist, dass ein Hebelmechanismus auf einer Oberfläche des Betätigungselements ruht, um sich einer Bewegung des Betätigungselements in einer definierten oder undefinierten Richtung zu widersetzen, sodass ein Aktuator ein Element zur Steuerung der Blockiermittel in einen Freigabezustand und ein Element zur Rückführung der Blockiermittel in einen Verriegelungszustand umfassen kann. Zusätzlich können die Blockiermittel ein weiteres Steuerungselement bzw. Sperrelement, welches den Wirkbereich des Verriegelungszustand bzw. des Freigabezustand einschränken kann, umfassen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Blockdiagramm einer Ausführungsform einer erfindungsgemäßen elektromechanischen Einheit.
- Fig. 2:: Schnittansichten einer Ausführungsform einer erfindungsgemäßen einer erfindungsgemäßen elektromechanischen Einheit in einer ersten Position.

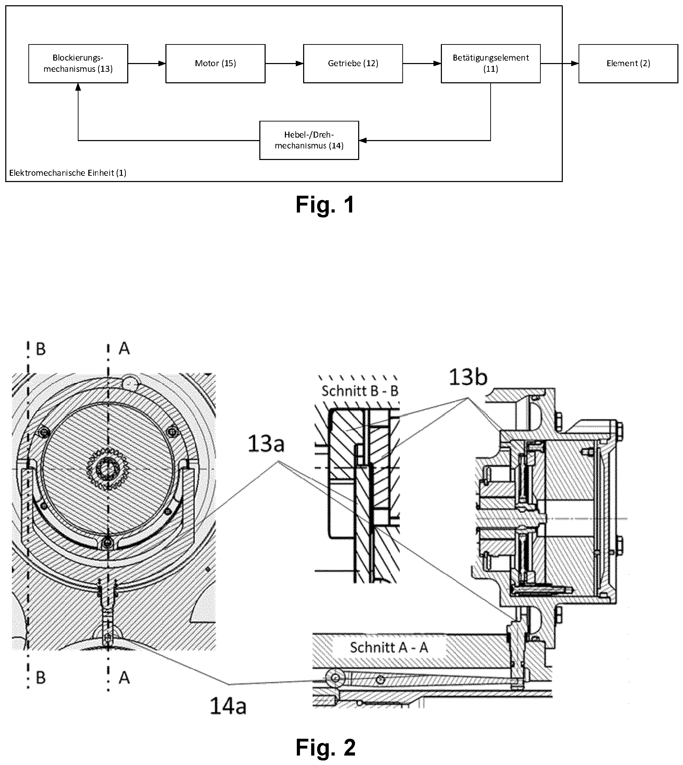

- Fig. 2:: Schnittansichten einer Ausführungsform einer erfindungsgemäßen einer erfindungsgemäßen elektromechanischen Einheit in einer zweiten Position.

In Fig. 1 ist ein Schema einer elektromechanischen Einheit 1 dargestellt. Diese weist entweder ein rotatorisches oder ein lineares Betätigungselement 11 auf. Die Einheit 1 wird durch einen Elektromotor 15 angetrieben und kann ein Getriebe 12 aufweisen. Die Einheit 1 kann durch Blockiermittel, wie einen Blockierungsmechanismus 13, z.B. eine Bremse fixiert werden.

Der Blockierungsmechanismus 13 kann an jeder Stelle in der elektromechanischen Einheit 1 angeordnet sein und kann durch Reib- oder Formschluss wirken. Der Blockierungsmechanismus 13 kann in eine oder beide Richtungen wirken.

Das Betätigungselement 11 betätigt nicht nur das Element 2, sondern auch einen Hebel- und/oder Drehmechanismus 14, sobald sich das Betätigungselement 11 in einer sicheren Position befindet.

Eine Komponente umfasst vorzugsweise das Betätigungselement 11 und das Element 2.

Durch den Hebel- und/oder Drehmechanismus 14 wird ein Sperrelement 13a innerhalb des Blockierungsmechanismus 13 aus seiner Ruheposition ausgelenkt, wie dies aus Fig. 2 hervorgeht.

In Fig. 2 sind Blockiermittel in Form von Bremsenstatoren 13b und ein Sperrelement 13a gezeigt. Das Sperrelement 13a ist über einen Hebel 14a mit einem Betätigungselement verbunden.

In Fig. 2 befindet sich das Betätigungselement 11 in einer Blockierposition. Deswegen ist das Sperrelement 13a nicht zwischen den Bremsenstatoren 13b angeordnet.

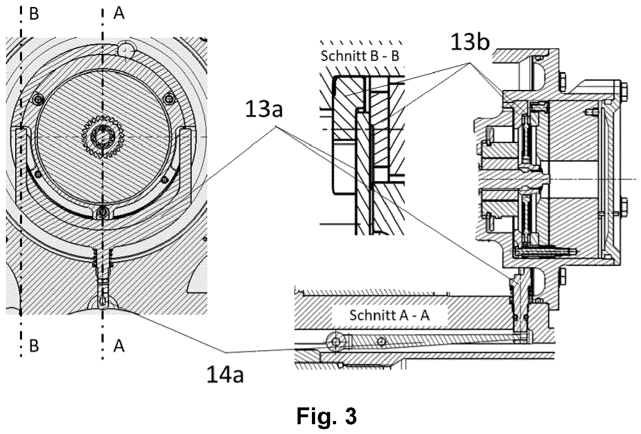

In Fig. 3 befindet sich das Betätigungselement 11 in einer Bewegungsposition. Deswegen ist das Sperrelement 13a zwischen den Bremsenstatoren 13b angeordnet.

Befindet sich das Element 2 außerhalb eines sicheren Blockierbereichs, also in einer Bewegungsposition, wenn der Verlust von Strom- und/oder Signalversorgung auftritt verhindert das Sperrelement 13a die Aktivierung des Blockierungsmechanismus 13 bis das Element den sicheren Blockierbereich erreicht.

Befindet sich das Element 2 innerhalb des sicheren Blockierbereichs wenn der Verlust von Strom- und/oder Signalversorgung auftritt ist der Blockierungsmechanismus 13 direkt aktiv.

Ein Beispiel für die mögliche Umsetzung ist die Anwendung zur Betätigung einer Bremsklappe, welche dem Hochauftriebssystem folgt. In dieser Anwendung kann als untere Grenze des sicheren Blockierbereichs die Position angesehen werden wenn ein Kontakt zwischen Hochauftriebssystem und Bremsklappe ausgeschlossen ist und als obere Grenze wenn im Flug sich Windlast und Unterdruck and der Bremsklappe ausgleichen und die externen Lasten null sind.

Der Blockierungsmechanismus 13 kann eine durch einen Magnet zu öffnende Bremse sein, welche ohne Versorgungspannung geschlossen ist und den Motor 15 bremst. Das Sperrelement 13a kann ein Abstandshalter sein, welcher zwischen den Bremsenstatoren 13b seine Ruheposition hat und ein Zufallen der Bremse außerhalb des sicheren Blockierbereichs verhindert. Der Hebel- und/oder Drehmechanismus 14 kann ein Hebel 14a sein, welcher das Sperrelement 13a im sicheren Bereich aus der Ruheposition herauszieht.

Es wird vorzugsweise ermöglicht, Komponenten, vornehmlich an Luftfahrzeugen, in einem oder mehreren bestimmten Blockierbereichen zu fixieren, während in den übrigen Bewegungspositionen die Komponenten von äußeren Kräften bewegt werden können. Vor allem, aber nicht nur, bei
- Bremsklappen
- Primären Flugsteuerungen
- Sekundären Flugsteuerungen
- Klappenbetätigungen
- Fahrwerksbetätigungen
erlaubt dieses Konzept die Anzahl der Bauteile, sowie Gewicht, Bauraum und Komplexität zu reduzieren.

## Patentansprüche

1. Blockiereinheit für eine durch mindestens ein Bewegungsmittel bewegbare Komponente eines Luftfahrzeugs, wobei die Komponente mindestens eine Blockierposition und mindestens eine Bewegungsposition einnehmen kann, wobei die Blockiereinheit Blockiermittel aufweist, wobei die Blockiermittel dazu angeordnet und ausgebildet sind, eine Bewegung der Komponente zu blockieren, wenn eine Blockierbedingung erfüllt ist, **dadurch gekennzeichnet, dass** die Blockiereinheit Sperrmittel aufweist, wobei die Sperrmittel derart angeordnet und ausgebildet sind, dass die Blockiermittel daran gehindert werden, die Bewegung der Komponente zu blockieren, wenn sich die Komponente in einer Bewegungsposition befindet und wobei die Sperrmittel derart angeordnet und ausgebildet sind, dass die Blockiermittel nicht daran gehindert werden, die Bewegung der Komponente zu blockieren wenn sich die Komponente in einer Blockierposition befindet.

2. Blockiereinheit nach Anspruch 1, **dadurch gekennzeichnet, dass** die Komponente linear und/oder rotatorisch bewegbar ist.

3. Blockiereinheit nach Anspruch 1 oder 2, **dadurch gekennzeichnet, dass** die Sperrmittel mechanisch, vorzugsweise über einen Hebelmechanismus, mit der Komponente verbunden sind.

4. Blockiereinheit nach einem der vorhergehenden Ansprüche, **dadurch gekennzeichnet, dass** die Sperrmittel derart ausgebildet sind, dass die Sperrmittel keine Strom- und/oder Signalversorgung benötigen, um die Blockiermittel daran hindern zu können, die Bewegung der Komponente zu blockieren, wenn sich die Komponente in einer Bewegungsposition befindet.

5. Blockiereinheit nach einem der vorhergehenden Ansprüche, **dadurch gekennzeichnet, dass** die Blockierbedingung ein Ausfall der Strom- und/oder Signalversorgung für mindestens ein Bewegungsmittel der Komponente ist.

6. Blockiereinheit nach einem der vorhergehenden Ansprüche, **dadurch gekennzeichnet, dass** die Blockiermittel derart ausgebildet und angeordnet sind, um die Bewegung der Komponente mittels Reib- und/oder Formschluss blockieren können.

7. Blockiereinheit nach einem der vorhergehenden Ansprüche, **dadurch gekennzeichnet, dass** die Blockiermittel derart ausgebildet und angeordnet sind, dass eine Kraftbegrenzung einer auf die Komponente wirkenden Kraft erfolgt.

8. Blockiereinheit nach einem der vorhergehenden Ansprüche, **dadurch gekennzeichnet, dass** die Blockiermittel derart ausgebildet und angeordnet sind, dass eine Bewegung der Komponente nur in eine, in zwei oder mehreren Richtungen blockiert werden kann.

9. Blockiereinheit nach einem der vorhergehenden Ansprüche, **dadurch gekennzeichnet, dass** die Blockiermittel Bremsstatorscheiben umfassen und die Sperrmittel ein Sperrelement, vorzugsweise in Form einer Gabel, umfassen, wobei die Bremsbacken und das Sperrelement derart ausgebildet und angeordnet sind, dass das Sperrelement mindestens teilweise zwischen den Bremsbacken angeordnet ist, wenn sich die Komponente in einer Bewegungsposition befindet und das Sperrelement nicht zwischen den Bremsbacken angeordnet ist, wenn sich die Komponente in einer Blockierposition befindet.

10. Blockiereinheit nach einem der vorhergehenden Ansprüche, **dadurch gekennzeichnet, dass** die Blockiereinheit derart ausgebildet und angeordnet ist, dass eine Bewegung der Komponente aus einer Bewegungsposition heraus, vorzugsweise durch Reibung und/oder Fluidbewegung und/oder elektrisch, gedämpft oder ungedämpft erfolgt.

11. Blockiereinheit nach einem der vorhergehenden Ansprüche, **dadurch gekennzeichnet, dass** die Blockiermittel derart ausgebildet und angeordnet sind, dass wenn eine Blockierung der Komponente erfolgt ist, die Aufhebung der Blockierung nur durch ein Verfahren, welches den Schritt umfasst, dass ein, vorzugsweise elektrisches, Signal an die Blockiermittel gesendet wird, erfolgen kann.

12. Blockiereinheit nach einem der vorhergehenden Ansprüche, **dadurch gekennzeichnet, dass** die Komponente ein Teil eines Motors, einer elektromechanischen Einheit, eine Bremsklappe, eine Komponente einer primären oder sekundären Flugsteuerung, eine Klappenbetätigung und/oder eine Fahrwerksbetätigung ist oder umfasst.

13. Elektromechanische Einheit mit einer Blockiereinheit nach einem der vorhergehenden Ansprüche.

14. Luftfahrzeug, insbesondere Flugzeug mit einer Blockiereinheit nach einem der Ansprüche 1 bis 12.
